(19) Europäisches Patentamt
European Patent Office
Office européen des brevets

(11) **EP 2 442 458 A1**

(12) **EUROPEAN PATENT APPLICATION**

(43) Date of publication:
**18.04.2012 Bulletin 2012/16**

(51) Int Cl.:
*H04B 7/08* (2006.01)      *H04B 1/707* (2011.01)

(21) Application number: **10187920.3**

(22) Date of filing: **18.10.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **NTT DOCOMO, INC.**<br>**Tokyo 100-6150 (JP)** | (72) Inventors:<br>• **Fang, Kun**<br>  **80339, München (DE)**<br>• **Auer, Gunther**<br>  **80339, München (DE)**<br><br>(74) Representative: **Zimmermann, Tankred Klaus et al**<br>**Schoppe, Zimmermann, Stöckeler & Zinkler**<br>**Patentanwälte**<br>**Postfach 246**<br>**82043 Pullach bei München (DE)** |

(54) **Method and receiver for recovering a desired signal transmitted in the presence of one or more interference signals**

(57) A method and receiver for recovering a desired signal transmitted in the presence of one or more interference signals receive a signal which includes a desired signal portion and one or more interference signal portions. The signal is iteratively processed to obtain the desired signal, wherein the signals processed in each iteration by beamforming having associated therewith one or more beamforming weights which are calculated for a each iteration based on a signal as processed in an earlier iteration.

FIG 8

received signal
(incl. desired & interference portion)

500 — signal = received signal

502 — calculate beam forming weights from signal

504 — apply linear beam forming to the signal

506 — obtain estimated symbol from strongest signal

508 — subtract estimated symbol from signal to generate processed signal

510 — signal = processed signal

512 — final estimate or max. number of iterations reached? — no

yes

514 — decode signal

output decoded signal

EP 2 442 458 A1

## Description

Embodiments of the present invention relate to communication systems such as mobile communication systems. More specifically, embodiments of the invention relate to approaches for recovering a desired signal transmitted in such systems in the presence of one or more interference signals. Embodiments of the invention describe a method for recovering a desired signal and a receiver, e.g. an iterative receiver with interference rejection and cancellation.

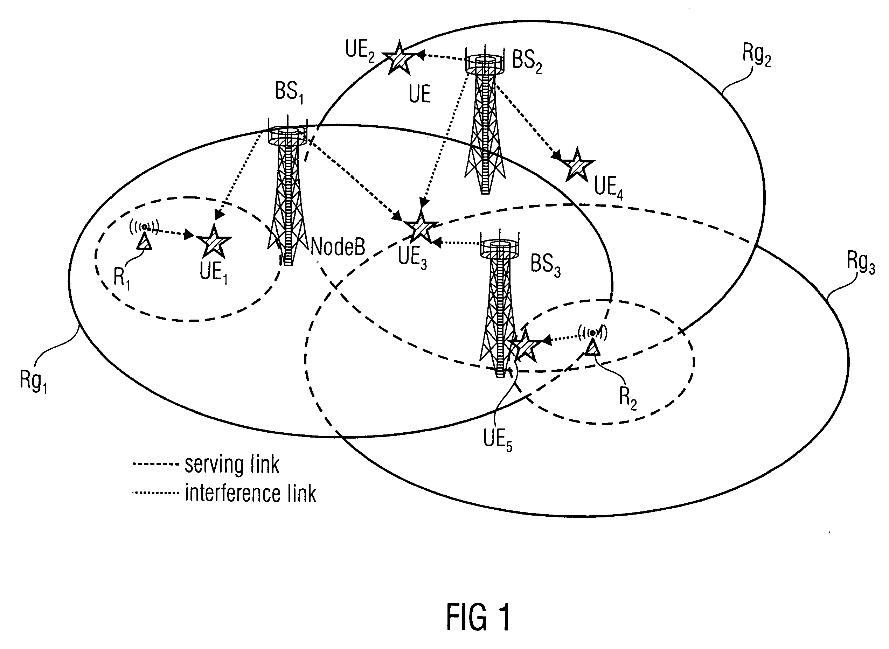

Communication systems, such as cellular systems will experience in future developments a large frequency reuse factor to enable a high system capacity. The increased cell density and decreased cell size will give rise to significant inter-cell interference. Fig. 1 shows a schematical representation of a portion of a cellular system comprising a plurality of base stations or nodes $BS_1$, $BS_2$ and $BS_3$. Each base station $BS_1$, $BS_2$ and $BS_3$ has a predefined range $Rg_1$, $Rg_2$ and $Rg_3$, respectively. The ranges $Rg_1$, $Rg_2$ and $Rg_3$ overlap in a way as shown in Fig.1. Further, Fig. 1 shows a plurality of mobile devices or user equipments UE (UE = user equipment) as well as additional resources $R_1$ and $R_2$ with which a user device may communicate. For example, the user equipment $UE_1$ is communicating with the resource $R_1$, as is shown by the solid arrow. However, the user equipment $UE_1$ is in the range of the base station $BS_1$ and, therefore, also receives an interference signal as is shown by the dashed arrow. By means of the solid arrows so-called "servicing links" are indicated, whereas the dashed arrows indicate so-called "interference links". For example, user equipment $UE_2$ and user equipment $UE_4$ are only in range of base station $BS_2$ and are connected to the base station $BS_2$ only via a serving link, i.e., the user equipment $UE_2$ and $UE_4$ do not experience any interference. Contrary thereto, user equipment $UE_3$ that is connected to the first base station $BS_1$ via the servicing link receives interference signals from the base stations $BS_2$ and $BS_3$. User equipment $UE_5$ is connected to the base station $BS_3$ via a servicing link, however, receives an interference signal from the resource $R_2$.

Thus, on the downlink the user equipment UE at a cell edge might experience a large inter-cell interference from neighboring base stations, while on the uplink, the base station might experience large interference from other user equipments transmitting using the same physical layer time/frequency resources. In the example shown in Fig. 1, for example, user equipment $UE_3$ may be at a cell edge of a cell around base station $BS_1$ and, therefore, may experience the above-mentioned inter-cell interference from the neighboring base stations $BS_2$ and $BS_3$. The reduced signal to interference plus noise ratio (SINR) will severely degrade the overall system performance.

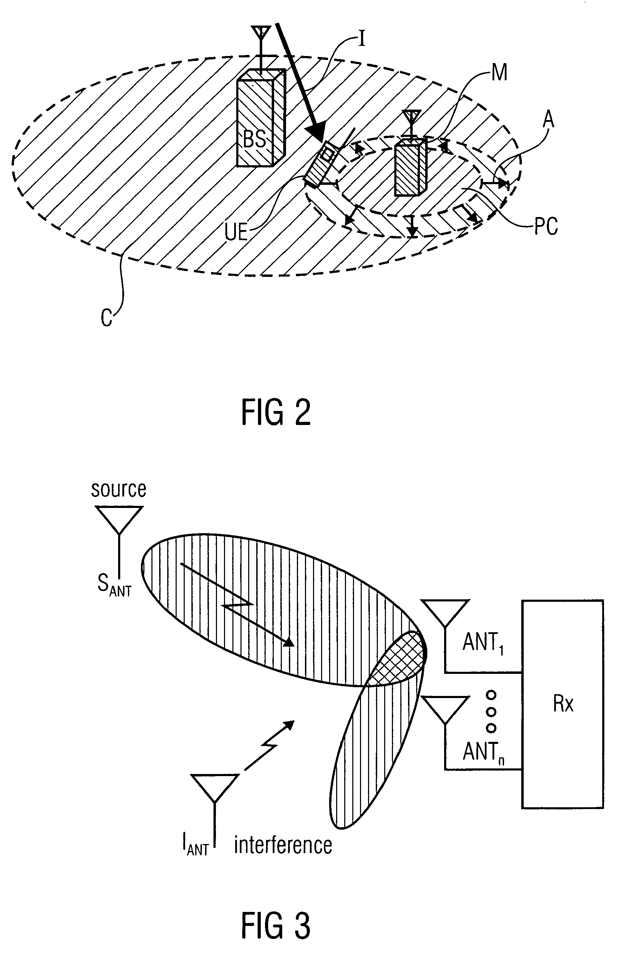

Similar problems may exist in networks, like heterogeneous networks (HetNets) that may allow for a range expansion. Fig. 2 shows an example of such a heterogeneous network. In such a network, a Piconet is formed, for example by a picocell base station M that is connected to a base station BS serving a cell C. By means of the area served by the picocell base station M, a picocell PC is defined within which a user equipment communicates with the picocell base station M which, in turn, communicates with a base station BS. Such networks may allow for an expansion of the range as indicated by the arrows A increasing the Picocell PC within which the user equipment may be served by the picocell base station M. However, this may result in a situation as shown in Fig. 2 in which the user equipment UE is at a location where it receives a large interference signal I from the base station BS that may even be larger than the desired signal power seen at the receiver in the user equipment.

In the art, there are different approaches to improve the system performance, for example, power control and radio resource management. Also, receiver side signal processing techniques are known to effectively combat the performance degradation due to the presence of strong interference signals. One approach is the so-called receiver optimum combining described by J. Winters, "Optimum combining in digital mobile radio with cochannel interference", IEEE J. Sel. Areas Commun., vol. 2, no. 4, pp. 528-539, Jul. 1984. This approach is also named "Interference Rejection Combining" (IRC) and is proposed to null out the interference using an adaptive antenna array. A. N. Barreto and R. D. Vieira, "A critical analysis of receiver diversity with multiple antennas with spatially coloured noise", Proc. of Intl. Workshop on Signal Processing Advances in Wireless Communication (SPAWC 2008), Recife, Brazil, Jul. 2008 show that a large performance gain can be achieved by applying IRC over the maximum ratio combining (MRC) approach with spatially colored noise plus interference. Fig. 3 is a schematic representation of a receiver having an antenna array receiving a desired signal and an interference signal. As is shown in Fig. 3, the receiver Rx comprises a plurality of antennas $ANT_1$ to $ANT_n$. It is assumed that a source antenna $S_{ANT}$ transmits a desired signal towards the receiver Rx. Further, an interference signal is provided from another antenna $I_{ANT}$. At the receiver Rx, receiver beamforming is done using the antenna array $ANT_1$ to $ANT_n$, thereby focusing on the signal received from the source antenna SLANT and preferably nulling out the interference signal from the interference antenna $I_{ANT}$. One approach, as mentioned above, is the interference rejection combining approach (IRC) that has shown large gain and that has also been specified for the HSDPA (high speed downlink packet access). By means of the IRC approach, the linear receiver beamforming approach, the receiver RX suppresses the interference signals and allows estimation and decoding of the desired signal transmitted from the antenna $S_{ANT}$.

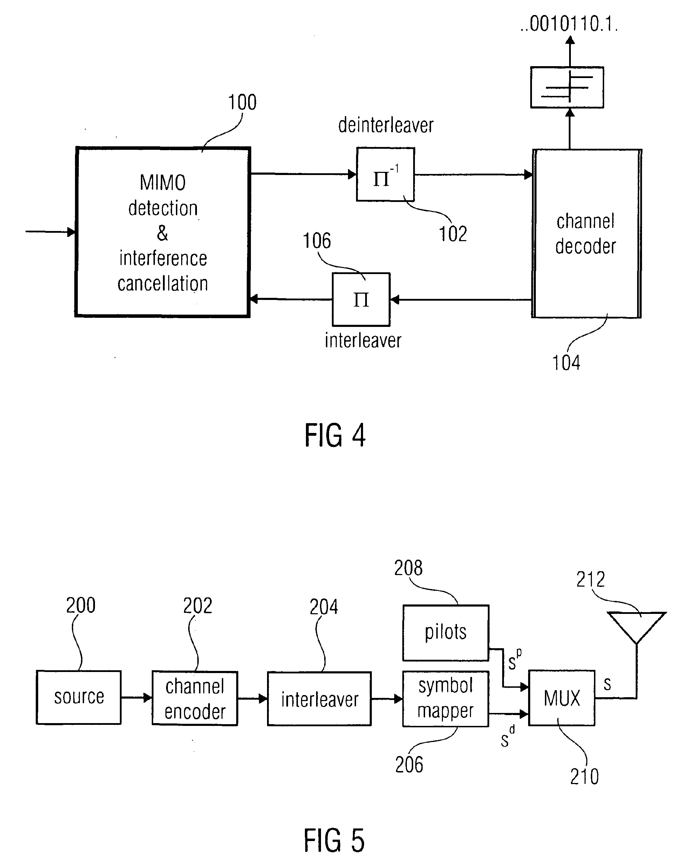

On the other hand, iterative receiver techniques are known to improve the system performance which is inspired by the so-called turbo equalization described by M. Tüchler, R. Koetter, and A. C. Singer, "Turbo equalization: principles and new results", IEEE Trans. Commun., vol. 50, no. 5, pp. 754-767, May 2002. In accordance with this approach, the soft information between different receiver function blocks is iteratively exchanged. Fig. 4 shows a block diagram of such an iterative receiver. The receiver comprises the input block 100 which executes a MIMO (multiple input/multiple output) detection and also an interference cancellation. The processed signal is forwarded through a deinterleaver 102 to a channel decoder 104 that decodes the signal and outputs the decoded symbol. The signal generated by the channel decoder 104 is fed back via an interleaver 106 to the input block 100. The receiver shown in Fig. 4, for a number of iterations, estimates interference signals by taking into account information from a previous iteration, cancels the interference signals, and estimates and decodes the desired signal, again taking into account the information from the previous iteration. This iterative receiver avoids the high complexity for an optimum joint processing.

Another approach is to apply a nonlinear detector using a successive interference cancellation (SIC), in case the additional complexity can be afforded. This is described by X. Wang and H. Poor, "Iterative (turbo) soft interference cancellation and decoding for coded CDMA," IEEE Trans. Commun., vol. 47, no. 7, pp. 1046-1061, Jul. 1999, and by G. J. Foschini, G. D. Golden, R. A. Valenzuela and P. W. Wolniansky, "Simplified processing for high spectral efficiency wireless communication employing multi-element arrays", IEEE J. Sel. Areas Commun., vol. 17, no. 11, pp. 1841-1852, Nov. 1999. In accordance with the successive interference cancellation process dependent from an antenna array size at the receiver one or more of the strongest interference signals or interferers are cancelled.

Thus, in the prior art a number of approaches for avoiding a degradation of the signal to interference plus noise ratio are known which use either a resource partitioning and cell selection, which, however, sacrifices time/frequency/ space resources. Also inter base station cooperation is known, however, this requires an accurate channel knowledge from neighboring cells. Also interference suppression and cancellation at the receiver as well as iterative receivers using soft information exchange are known.

It is an object of the invention to provide an improved interference management scheme.

This object is achieved by a method according to claim 1 and by a receiver according to claim 12.

Embodiments of the invention provide a method for recovering a desired signal transmitted in the presence of one or more interference signals, the method comprising

receiving a signal, the received signal including a desired signal portion and one or more interference signal portions; and iteratively processing the signal to obtain the desired signal,

wherein iteratively processing the signal comprises processing the signal in each iteration by beamforming having associated therewith one or more beamforming weights, the one or more beamforming weights being calculated for each iteration based on the signal as processed in an earlier iteration.

Further embodiments of the invention provide a receiver for recovering a signal transmitted in the presence of one or more interference signals, the receiver comprising:

a plurality of antennas, and

a signal processor configured to receive from the antennas a signal, the received signal including a desired signal portion and one or more interference signal portions, and configured to iteratively process the received signal to obtain the desired signal,

wherein the signal processor is configured to process in each iteration the signal by beamforming having associated therewith one or more beamforming weights, wherein the signal processor is configured to calculate the one or more beamforming weights for each iteration based on the received signal as processed in an earlier iteration.

Further embodiments of the invention provide a mobile unit comprising the receiver in accordance with embodiments of the invention, while other embodiments provide a base station using a receiver in accordance with embodiments of the invention.

Thus, embodiments of the invention use, in a new way, known approaches for interference cancellation. More specifically, embodiments of the invention provide an iterative receiver using the SIC (successive interference cancellation) algorithm that operates by successively canceling a stronger signal from a received signal including various signal portions. This is repeated until all users are decided or a permissible number of cancellations is reached. The strongest signal is determined in each iteration using the interference rejection combining (IRC) algorithm, which is a beamforming approach. The one or more weights for this beamforming approach are calculated in each iteration on the basis of the signal processed in the previous iteration, preferably for maximizing the SINR. The beamforming weights may be calculated to maximize the SINR between the target detected signal in a current iteration (the target detected signal may be the desired signal or the interference signal) and other signals left in the processed received signals. The beamforming calculation may be done using well known approaches (see e.g. by R. A. Monzingo and T. W. Miller, Introduction to adaptive arrays, New York, Wily, 1980). Embodiments of the invention provide an approach that is able to achieve the desired cell and cell-edge spectral efficiency targets.

Embodiments of the invention provide an iterative receiver algorithm to enhance the performance of interference limited systems. By suppressing the interference using adaptive antenna arrays, the estimation performance can be greatly improved. For the advanced receiver which is capable of decoding the desired signal as well as part of the interference signal, the successive interference cancellation may be used to further increase the receiver robustness to interference. While the optimal joint processing is prohibitive due to the heavy computational requirements, performing these operations separately in an iterative fashion allows for exploiting the advantages of these two approaches while reducing the receiver complexity.

In accordance with embodiments of the invention, for example for users at a cell edge in a cellular system, the serious degradation of the system performance due to inter-cell interference may be avoided or reduced by using the interference rejection combining (IRC) algorithm that nulls out the interference using adaptive antenna arrays. In addition, a receiver that is capable of decoding the desired signal as well as part of the interference signal may employ the successive interference cancellation (SIC) which first demodulates the interference signal by nulling out the desired signal, and then subtracts the estimated interference symbols from the received signal so that the desired signal can be decoded with much less interference. As mentioned above, performing these two approaches jointly would be prohibitive due to the heavy computational requirements, so that in accordance with the inventive approach the above described IRC algorithm and the SIC algorithm as well as other functions are performed separately in an iterative fashion thereby reducing the receiver complexity, with soft information being interchanged between different receiver components, for example the channel estimator, the MIMO detector and the channel decoder.

Thus, embodiments of the invention provide an advanced receiver for estimating a signal in the presence of a strong inter-cell interference. Adaptive antenna arrays are used to develop a receiver beamforming approach within an iterative receiver, where the one or more beamforming weights are updated in each iteration taking into account the soft information from the channel decoder and previously estimated interference signals. The signals (either the interference or desired signals) having a large power can be first estimated using an optimum combining approach as described above and then can be successively cancelled to further improve the performance.

The proposed algorithm or approach may be applied at the base station or at a user equipment.

The inventive approach is advantageous as through the advanced signal processing at the receiver the interference can be rejected and cancelled or at least substantially reduced, thereby achieving a better performance which, in turn, leads to a higher spectral efficiency, a higher frequency use factor, a large number of users to be served, and a user experience enhancement. This allows increasing the network capacity and serving a larger number of customers/ users concurrently.

In accordance with embodiments of the invention, iteratively processing the signal comprises detecting a symbol in each iteration and calculating the one or more beamforming weights on the basis of the detected symbol in a preceding iteration, wherein the beamforming weights may be calculated to maximize the signal to interference plus noise ratio between the desired signal portion and the interference signal portion.

In accordance with embodiments the iteratively processing of the received signal may comprise for a number of iterations including the estimation of the interference signal portions on the basis of information from a previous iteration and canceling the interference signal portions, wherein the desired signal portion is estimated and decoded following the iteration.

In accordance with other embodiments of the invention, processing the received signal comprises:

(a) at an initial stage, processing the signal received by beamforming using initial beamforming weights,

(b) obtaining an initial estimate of the strongest signal on the basis of the signal processed by beamforming, the initial estimate including soft information,

(c) subtracting from the signal received the soft information to generate a processed signal,

(d) on the basis of the processed signal calculating the beamforming weights,

(e) obtaining an estimate of the next strongest signal on the basis of the processed signal processed by beamforming, the estimate including soft information, and

(f) repeating steps (c) to (e) on the basis of the processed signal, until an estimate of the desired signal portion is obtained or until a maximum number of iterations is reached.

The initial beamforming weights may be calculated on the basis of pilot symbols included in the signal received.

In accordance with further embodiments, receiving a signal comprises receiving the signal including the desired signal portion and the one or more interference signal portions at a plurality of antennas, wherein iteratively processing a received signal comprises for a number of iterations:

calculating the beamforming weights,

suppressing the desired signal portion and other interference signal portions by beamforming,

estimating one of the interference signal portions,

subtracting the estimated one interference signal portion from the received signal,

recalculating the beamforming weights,

suppressing the other interference signal portions,

estimating the desired signal portion, and

decoding the desired signal.

In accordance with this embodiment, the number of iterations may depend from the number of interference signals the receiver can cancel. The number of iterations is an arbitrary number which is independent from the number of receive antennas. The number of interference signals to be detected and subtracted is e.g. upper-bounded by the number of receive antennas minus one.

In accordance with embodiments of the invention, the beamforming may comprise a linear receiver beamforming, like interference rejection combining, and the processing may comprise interference cancellation, like successive interference cancellation.

Embodiments of the invention will be described in the following with reference to the drawings in which:

Fig. 1    shows a schematical representation of a portion of a cellular system;

Fig. 2    shows an example of a heterogeneous network;

Fig. 3    is a schematic representation of a receiver having an antenna array receiving a desired signal and an interference signal;

Fig. 4    shows a block diagram of an iterative receiver;

Fig. 5    is a block diagram of a transmitter as it may be used in a communication system in which the iterative receiver approach using combined interference suppression and cancellation in accordance with embodiments of the invention is applied;

Fig. 6    shows a block diagram of a receiver in accordance with embodiments of the invention;

Fig. 7    shows an embodiment for integrating the receiver beamforming approach into an iterative receiver using the SIC algorithm;

Fig. 8    shows a further embodiment of the invention using an iterative receiver approach implanting a successive interference canceller; and

Fig. 9    shows a graph showing the BLER performance for a system with one synchronized interferer.

In the subsequent description of embodiments of the invention, reference will be made to the user equipment side operation for a downlink transmission. However, it is noted that the principles described in the following can be equally applied to the base station side operation and it is straightforward to extend the subsequently described approach or algorithm accordingly. Further, it is noted that in the subsequent description the following notation will be used. The upper (lower) boldface letters are used to denote matrices (column vectors). $(.)^T$ and $(.)^H$ represent a transpose and complex conjugate transpose (Hermitian), respectively. $E(.)$ stands for the statistical expectation. The covariance matrix between $\mathbf{x}$ and $\mathbf{y}$ is defined as $\text{Cov}(\mathbf{x}, \mathbf{y}) = E(\mathbf{x}\mathbf{y}^H) - E(\mathbf{x})E(\mathbf{y}^H)$.

Fig. 5 is a block diagram of a transmitter as it may be used in a communication system in which the iterative receiver approach using combined interference suppression and cancellation in accordance with embodiments of the invention is applied. The transmitter comprises a source 200 providing the signal to be transmitted, a channel encoder 202 and an interleaver 204. Further, a symbol mapper 206 is provided as well as a pilot symbol source 208 wherein the signals from the symbol mapper 206 and the pilot signals from the pilot symbol source 208 are combined by the multiplexer 210 and forwarded to the antenna 212 for transmission.

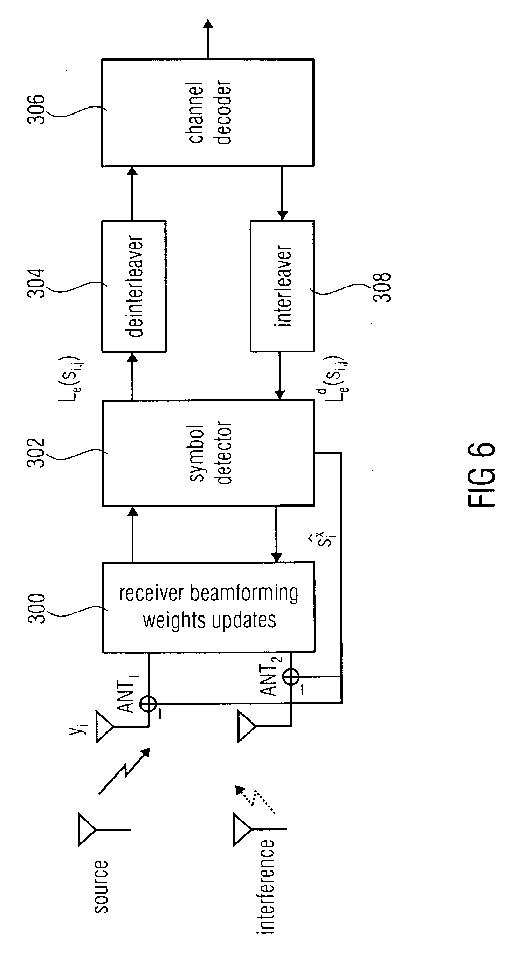

Fig. 6 shows a block diagram of a receiver in accordance with embodiments of the invention. The receiver comprises a first antenna ANT1 and a second antenna ANT2 connected to a first block 300 for processing the signals received via the antennas $ANT_1$ and $ANT_2$. It is noted that other embodiments may use more than two antennas. The principles described here equally apply to such receivers as well. Block 300 performs the receiver beamforming and the necessary receiver beamforming weight updates. The signals output from block 300 are input into a symbol detector 302 that detects a symbol and outputs it to a deinterleaver 304 that, in turn, provides the signal to a channel decoder 306 that outputs a decoded symbol. Further, the symbol decoded by the decoder 306 is fed back to the symbol detector 302 via an interleaver 308, and, further, the symbol is also fed back to the block 300. In Fig. 6 two antennas providing signals towards the receiver are shown, namely the source antenna providing the desired signal and an interference antenna providing an interference signal. Thus, at the antenna array formed of antennas $ANT_1$ and $ANT_2$ a signal is received comprising portions from the source antenna and from the interference antenna, i.e., a desired signal portion and an interference signal portion.

In the subsequent discussion, it is assumed that a single user equipment having a receiver as shown in Fig. 6 receives a desired signal from a serving base station, the source, as well as interference signals from neighboring base stations transmitting using the same carrier frequency. The base stations from different cells are assumed to be synchronized, so that the desired signal and the interference signals start at the same time and have the same duration. The user equipment has the two receive antennas $ANT_1$ and $ANT_2$ which are used for performing inter-cell interference cancellation. Each base station is assumed to have one antenna to transmit one stream of information. However, it is noted that the invention is not limited to such embodiments but it is straightforward to extend the subsequently described approaches and algorithms to a multi-antenna case, where both the user equipment and the base station are equipped with a plurality of antennas to enable diversity reception and multiple stream transmission (spatial multiplexing) as, for example, described by L. Zheng and D.N.C. Tse, "Diversity and multiplexing: A fundamental tradeoff in multiple antenna channels", IEEE Trans. On Inform. Theory, vol. 49, no. 5, pp. 1073-1096, May. 2003.

A block transmission system is assumed as well as a block fading channel where the channel is constant during the block, and independent and identically distributed (i.i.d.) on different blocks. At the transmitter shown in Fig. 5, a sequence of bits provided by the source 200 is encoded using the channel encoder 202 with an error correction coding. By means of the interleaver 204 the coded bits are interleaved and mapped into $N_d$ complex signals that are represented by the $N_d$ x 1 vector $\mathbf{s}^D$ (the output from the symbol mapper 206) and the data symbols are assumed to be uncorrelated. The pilot symbol source 208 provides the Np x 1 vector $\mathbf{s}^P$ that stands for the pilot symbols, which are multiplexed by means of the multiplexer 210 with $\mathbf{s}^D$ to form a block of N = $N_d$ + $N_P$ transmitted symbols s. For simplicity, a unit-energy quaternary phase-shift keying (QPSK) is assumed with a symbol alphabet as shown in Table 1 below.

**Table 1** QPSK symbol alphabet

| k | 1 | 2 | 3 | 4 |
|---|---|---|---|---|
| $(\alpha_{k,1}, \alpha_{k,2})$ | (0,0) | (1,0) | (0,1) | (1,1) |
| $\alpha_k$ | $\dfrac{(+1+i)}{\sqrt{2}}$ | $\dfrac{(-1+i)}{\sqrt{2}}$ | $\dfrac{(+1-i)}{\sqrt{2}}$ | $\dfrac{(-1-i)}{\sqrt{2}}$ |

The symbols shown in Table 1 are used for the desired signal as well as for all interference signals. The invention is not limited to such symbols, rather, the subsequently described algorithms can be easily extended to other constellation, such as a constellation described by M. Tüchler, A. C. Singer and R. Koetter, "Minimum mean squared error equalization using a priori information", IEEE Trans. Signal Processing, vol. 50, pp. 673-683, Mar, 2002.

For a discrete-time baseband model, the received signal at time index i can be written as:

$$\begin{pmatrix} y_i^1 \\ y_i^2 \end{pmatrix} = \begin{pmatrix} h_0^1 \\ h_0^2 \end{pmatrix} s_i^0 + \sum_{x=1}^{X'} \begin{pmatrix} h_x^1 \\ h_x^2 \end{pmatrix} s_i^x + \begin{pmatrix} n_i^1 \\ n_i^2 \end{pmatrix} \qquad (1)$$

Where $y_i^m$ is the received signal at the *mth* receive antenna, $s_i^0$ is the transmitted signal from the serving base station and is the *ith* QPSK symbol of **s**, $h_0^m$ is the channel coefficient between the transmitter antenna of the serving base station and the *mth* receive antenna, $s_i^x$ is the transmitted signal from the *xth* interfering base station, $h_x^m$ is the channel coefficient between the transmit antenna of the xth interfering base station and the *mth* receive antenna. $n_i^m$ stands for the additive temporally and spatially white Gaussian noise at the *mth* receive antenna, which is uncorrelated with the data symbols from the serving and interfering base stations, and with a zero mean and variance $\sigma_n^2$.

In the subsequent discussion, it is assumed that the receiver has the necessary channel state information (CSI) between the serving base station and the user equipment, and in case of embodiments applying the successive interference cancellation (SIC) it is further assumed that the user equipment has knowledge about the interference link, for example the channel between the user equipment and the interfering base station and the modulation scheme of the interference signals.

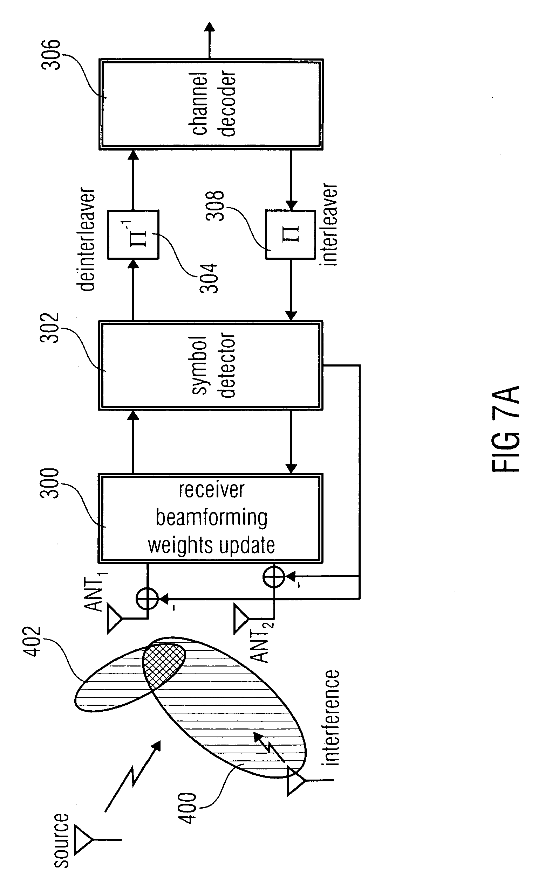

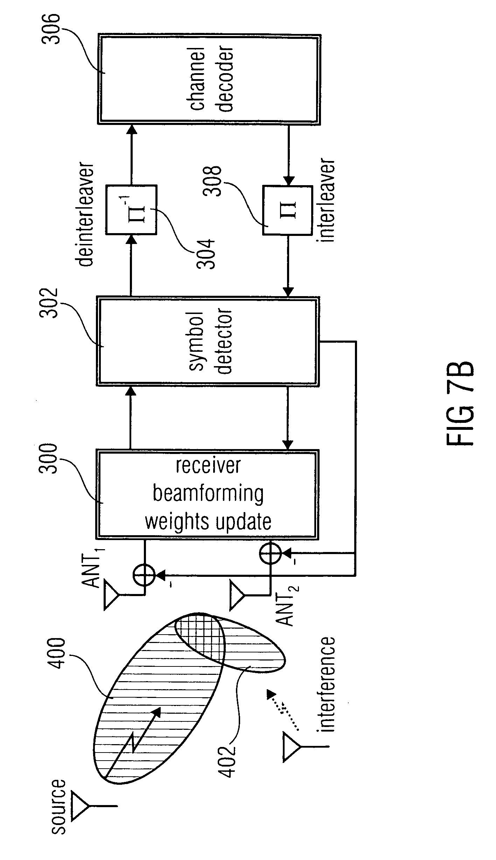

Fig. 7 shows an embodiment for integrating the receiver beamforming approach into an iterative receiver using the SIC algorithm. Initially, on the basis of pilot symbols in the signal received at the antennas, beamforming weights are calculated and the antennas are controlled on the basis of the information from the block 300 in such a way that a major reception beam 400 is directed towards the interference antenna while a minor reception beam is directed away from the interference and source antennas thereby suppressing the desired signal provided by the source antenna and other possible interference signals (see Fig. 7(a)). The signal received from the interference antenna is estimated and the estimated interference signal is subtracted from the received signal. In the next iteration, the beamforming weights are recalculated such that the major reception beam 400 is now directed towards the source antenna while the minor reception beam 402 is directed in a direction different from a direction of the interference antenna (see Fig. 7(b)). This results is a suppression of the interference signal and allows estimating from the signal received now the desired signal which is then finally decoded at block 306 and output. In other words, in accordance with embodiments of the invention described with regard to Fig. 7 for a number of iterations an interference cancellation is carried out in accordance with which on the basis of a linear receiver beamforming approach a desired signal is suppressed (taking into account information from a previous iteration), the interference signals are estimated, again taking into account information from the previous iteration, and finally the interference signals are cancelled. For each operation a new linear receiver beamforming is executed by calculating new weights, thereby suppressing the interference signals so that the desired signal may be estimated and decoded. Thus, the iterative receiver processes the received signal by the linear receiver beamforming approach and passes the processed signal to the symbol detector from which the detected symbol is subsequently fed back to the linear receiver beamforming unit in an iterative manner, wherein in each iteration the beamforming weights are calculated/recalculated based on the previously decided interference and desired signals fed back from the symbol detector in a preceding iteration.

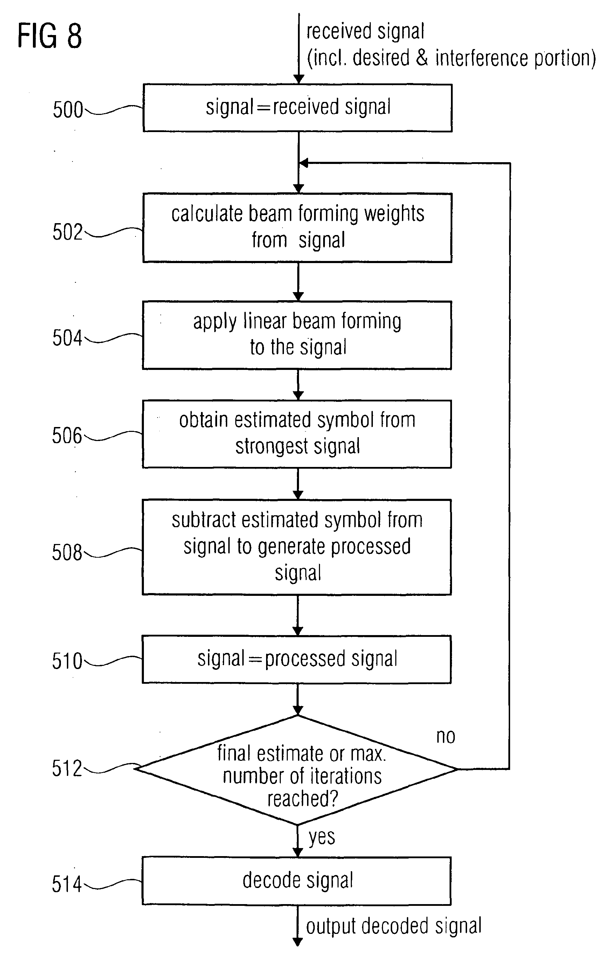

Fig. 8 shows a further embodiment of the invention using an iterative receiver approach implanting a successive interference canceller. At 500 a signal is received which includes a desired signal and one or more interference signals. The received signal is the signal subsequently processed. At 502, the beamforming weights are calculated from the signal. In an initial state, the received signal is processed by the linear receiver beamforming block 300 (see Fig. 6) using an initial set of beamforming weights. After the beamforming weights were calculated in 502 the linear beamforming approach is applied to the signal at 504 using the calculated beamforming weight. An output generated at block 300 is passed to symbol detector 302 for obtaining at 506 an estimated symbol from the strongest signal, which may be either the interference signal or the desired signal. At an initial stage at 506 an initial estimate of the strongest signal is obtained. At 508 the soft information about the strongest signal is fed back and subtracted from the signal to construct a processed received signal so that at 510 the signal is now the processed signal. At 512 it is determined whether a final estimate of the desired signal is now available or whether a maximum number of iterations is reached. In case neither the final estimate is available nor the maximum number of iterations is reached, the method goes back to block 502 and starts a further or subsequent iteration in which the beamforming weights are recalculated based on the processed received signal which is then fed to the block 300 for linear receiver beamforming using the updated set of beamforming weights. The output of block 300 is again passed to the symbol detector 302 to obtain an estimate of the second strongest signal (in the second iteration). In case it is determined in step 512 that the final estimate is reached or the maximum number of iterations is reached, the method proceeds to step 514, where the signal is decoded and output.

In accordance with embodiments of the invention, the linear receiver beamforming weights are computed such that the signal to interference plus noise ratio between the desired signal and the interference is maximized.

By means of the inventive approach described in accordance with embodiments of Figs. 7 and 8, significant performance gains can be achieved. This yields a system that is more robust with regard to a large power interference as it may be experienced in HetNets (see Fig. 2). Also, the number of iterations can be reduced which, in turn, reduces the complexity of the system. A higher spectral efficiency and an increase in network capacity can be achieved. Further, the user experience is improved and the number of users served concurrently may be increased.

Subsequently, the embodiment of Fig. 8 will be described in further detail on the basis of an iterative receiver implemented with a SIC approach where the desired signal as well as a certain number of interference signals are detected. Equation (1) is rewritten by stacking the signals from the two receiver antennas $ANT_1$ and $ANT_2$ (see Fig. 6) together, and reordering the index according to their signal power at the receiver

$$\mathbf{y}_i = \sum_{x=0}^{X} \mathbf{h}_x s_i^x + \mathbf{u}_i \qquad (2)$$

where $\mathbf{y}_i = [y_i^1, y_i^2]^T$, $\mathbf{h}_x = [h_x^1, h_x^2]^T$, X is the number of interference signals the receiver can detect and cancel, and the received signal $\mathbf{h}_0 s_i^0$ is assumed to have the largest power.

The vector $\mathbf{u}_i = \sum_{x=X+1}^{X'} \mathbf{h}_x s_i^x + \mathbf{n}_i$ is the sum of noise and other interference signals which will not be detected,

where $\mathbf{n}_i = [n_i^1, n_i^2]^T$, and where $\mathbf{u}_i$ is assumed to be a temporally white and spatially correlated vector with complex normal distribution CN($\mathbf{0}$, $\mathbf{R_{uu}}$). As in a packet-switched network, traffic signals are scheduled by resource blocks and interference signals from neighboring cells may vary from block to block. Thus, the statistical property of the noise plus interference signal $\mathbf{u}_n$ is assumed to be constant in one block and will change independently over a plurality of blocks.

At an initial state, no prior information is available. The received signal is processed by linear receiver beamforming using an initial set of beamforming weights, which is calculated from the received pilot symbols. The output is passed to the symbol detector 302 to obtain an initial estimate of the strongest signal which may either be the interference signal or the desired signal, and then the estimated symbol is subtracted from the received signal to construct a processed received signal. The beamforming weights are recalculated based on the processed received signal. In a subsequent iteration, the processed signal is fed to the linear receiver beamforming block 300 using an updated set of beamforming weights, and the output is passed to the symbol detector 302 to obtain the estimate of the second strongest signal. The iterations are repeated until the final estimate of the desired signal is available or until a maximum number of iterations is reached. It is assumed that only the soft information for the desired signal is sent to the channel decoder 306 to be decoded so that the interference signals will only be detected at the symbol level. The detailed algorithms are described below.

$s_i^x$ is denoted as the *ith* QPSK symbol of $\mathbf{s}^x$. After subtracting the detected signals the processed receive signal can be written as

$$\overline{\mathbf{y}}_i = \mathbf{y}_i - \sum_{x=0}^{X} \mathbf{h}_x m_i^x \qquad (3)$$

where $m_i^x$ is the mean of the symbol $s_i^x$, which is calculated from soft information as will be explained later. Instead of the soft decisions used for SIC as described by M. Tüchler, R. Koetter, and A. C. Singer, "Turbo equalization: principles and new results", IEEE Trans. Commun., vol. 50, no. 5, pp. 754-767, May 2002 hard decisions can also be applied in case they are sufficiently reliable.

The covariance matrix of $\mathbf{u}_i$ is estimated as

$$\mathbf{R_{uu}} = \frac{1}{\overline{N}} \sum_{i=0}^{\overline{N}} \overline{\mathbf{y}}_i \overline{\mathbf{y}}_i^H \qquad (4)$$

where $\overline{N}$ is the number of symbols used to calculate $\mathbf{R_{uu}}$ (see E. G Larsson, "Robust structured interference rejection combining", in Proc. Of IEEE Wireless Communications and Networking Conference (WCNC), New Orleans, LA, Mar. 2005). In the first iteration, only pilot symbols are used. In the later iterations, as previous decisions are available, both data and pilot symbols are used to improve the estimation quality of $\mathbf{R_{uu}}$, for example, $\overline{N}=N$.

Given the estimate $\mathbf{R_{uu}}$, the updated unbiased estimate of $s_i^x{}'$ can be expressed as

$$\hat{s}_i^{x'} = \mathbf{w}^H \overline{\mathbf{y}}_i{}' = \frac{\mathbf{h}_{x'}^H \mathbf{R}_{\mathbf{uu}}^{-1} \overline{\mathbf{y}}_i{}'}{\mathbf{h}_{x'}^H \mathbf{R}_{\mathbf{uu}}^{-1} \mathbf{h}_{x'}} \tag{5}$$

$$\overline{\mathbf{y}}_i{}' = \mathbf{y}_i - \sum_{x=0}^{X} \mathbf{h}_x m_i^x, x \neq x'$$ (see J. Winters, "Optimum combining in digital mobile radio with cochannel interference," IEEE J. Sel. Areas Commun., vol. 2, no. 4, pp. 528-539, Jul. 1984). The beamforming weights $\mathbf{w} = \mathbf{R}_{\mathbf{uu}}^{-1} \mathbf{h}_{x'} / (\mathbf{h}_{x'}^H \mathbf{R}_{\mathbf{uu}}^{-1} \mathbf{h}_{x'})$ are derived to maximize the output SINR, as described by R. A. Monzingo and T. W. Miller, Introduction to adaptive arrays, New York, Wily, 1980, which can be expressed as

$$\text{SINR}_o = \frac{|\mathbf{w}^H \mathbf{h}_{x'} s_i^{x'}|^2}{|\mathbf{w}^H (\overline{\mathbf{y}}_i{}' - \mathbf{h}_{x'} s_i^{x'})|^2}. \tag{6}$$

For the desired signal, an estimated symbol from the detector 302 will be sent to the channel decoder 306. For simplicity, in a subsequent description the corresponding superscript x is dropped and the desired signal is denoted as $s_i$, with $(S_{i,1}, S_{i,2})$ as the related bits. The mean of the symbol $s_i$ is denoted as $m_i$=E $(s_i)$. As far as the $N_d$ data symbols are concerned, the means are initialized with zeros. But in every iteration, they are updated using soft information from the estimated symbols. On the other hand, for each of the $N_p$ pilot symbols, the mean is set to the pilot symbol value for all the iterations.

After each iteration of the detector 302 and the decoder 306 the mean is updated using the soft estimated symbols. Mores specifically, the extrinsic look-likelihood ratio (LLR) is calculated as $L_e(s_{i,j})=L(s_{i,j}|\hat{s}_i)-L(s_{i,j})$ where $L(s_{i,j})$ is the "a priori" LLR and $L(s_{i,j}|\hat{s}_i)$ is the "a posteriori" LLR, which are defined as

$$L(s_{i,j}) = \ln \frac{P(s_{i,j} = 0)}{P(s_{i,j} = 1)},$$

$$L(s_{i,j} | \hat{s}_i) = \ln \frac{P(s_{i,j} = 0 | \hat{s}_i)}{P(s_{i,j} = 1 | \hat{s}_i)},$$

$$L_e(s_{i,j}) = L(s_{i,j} | \hat{s}_i) - L(s_{i,j}) \tag{7}$$

where $j$ = 1, 2, where $s_i$ is the estimated symbol at the current iteration, where $P(s_{i,j}=0)$ and $P(s_{i,j}=1)$ are the a priori probabilities, and where $P(s_{i,j}=0|\hat{s}_i)$ and $P(s_{i,j}=1|\hat{s}_i)$ are the a posteriori probabilities (see M. Tüchler, R. Koetter, and A. C. Singer, "Turbo equalization: principles and new results", IEEE Trans. Commun., vol. 50, no. 5, pp. 754-767, May 2002).

In order to calculate $L_e(s_{i,j})$, the probability density function (PDF) $p(\hat{s}_i|s_i = \alpha_k)$ is derived, which can be approximated as Gaussian: $$p(\hat{s}_i | s_i = \alpha_k) = \frac{1}{\pi\sigma_{i,k}^2} \cdot e^{-|\hat{s}_i - \mu_{i,k}|^2/\sigma_{i,k}^2}$$ with mean $\mu_{i,k}$=E$(\hat{s}_i|s_i = \alpha_k)$ and variance

$$\sigma^2_{i,k} = \text{Cov}(\hat{s}_i, \hat{s}_i \mid s_i = \alpha_k),$$ as is described, for example, by M. Tüchler, R. Koetter, and A. C. Singer, "Turbo equalization: principles and new results", IEEE Trans. Commun., vol. 50, no. 5, pp. 754-767, May 2002 and M. Tüchler, and by A. C. Singer and R. Koetter, "Minimum mean squared error equalization using a priori information", IEEE Trans. Signal Processing, vol. 50, pp. 673-683, Mar, 2002. The mean $\mu_i$ and the variance $\sigma^2_i$ can be derived from equation (5) as

$$\begin{aligned}\mu_{i,k} &= \alpha_k \\ \sigma^2_{i,k} &= 1/(\mathbf{h}^H \mathbf{R}_{\mathbf{uu}}^{-1} \mathbf{h}).\end{aligned} \qquad (8)$$

The extrinsic LLR can be subsequently calculated as

$$\begin{aligned}L_e(s_{i,1}) &= \sqrt{8}\text{Re}(\hat{s}_i)(\mathbf{h}^H \mathbf{R}_{\mathbf{uu}}^{-1} \mathbf{h}) \\ L_e(s_{i,2}) &= \sqrt{8}\text{Im}(\hat{s}_i)(\mathbf{h}^H \mathbf{R}_{\mathbf{uu}}^{-1} \mathbf{h}).\end{aligned} \qquad (9)$$

(see K. Fang, L. Rugini and G. Leus, "Low-complexity block turbo equalization for OFDM systems in time-varying channels", IEEE Trans. Signal Processing, vol. 56, no. 11, pp. 5555-5566, Nov. 2008).
As is shown in Fig. 6 the extrinsic LLR $L_e(s_{i,j})$ is passed to the decoder 306 to generate a new extrinsic LLR

$L_e^d(s_{i,j})$, which is added to the a priori LLR to form the a posteriori LLR or the new version of the a priori LLR which is used to update the mean of the estimated symbol:

$$\begin{aligned}L_{new}(s_{i,j}) &= L(s_{i,j}) + L_e^d(s_{i,j}) \\ m_{i,new} &= \frac{\tanh(\frac{L_{new}(s_{i,1})}{2}) + i \cdot \tanh(\frac{L_{new}(s_{i,2})}{2})}{\sqrt{2}}.\end{aligned} \qquad (10)$$

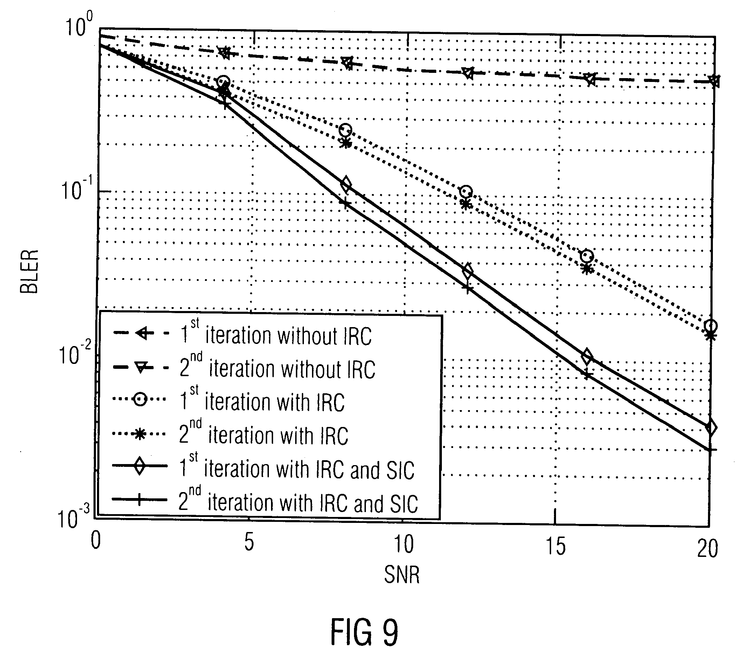

(see M. Tüchler, R. Koetter, and A. C. Singer, "Turbo equalization: principles and new results", IEEE Trans. Commun., vol. 50, no. 5, pp. 754-767, May 2002 and K. Fang, L. Rugini and G. Leus, "Low-complexity block turbo equalization for OFDM systems in time-varying channels", IEEE Trans. Signal Processing, vol. 56, no. 11, pp. 5555-5566, Nov. 2008.
The above calculation is for the desired signal, whose soft information is passed to the channel decoder 306 for decoding. For interference signals, only the extrinsic information $L_e(s_{i,j}^x)$ is used to update the mean value shown in equation 10 which is calculated in the same way as shown in equation 8 and 9.
The above described algorithms were examined and compared by simulations. A system having a block length N=168 was considered with Np=5 pilot symbols. According to equation 1, the channel is assumed to be Rayleigh distributed with $\text{E}\{|h_0^m|^2\} = 1$. The signal-to-interference ratio SIR for the *xth* interferer is defined as $\text{SIR}_x = 1/\text{E}\{|h_x^m|^2\}$, and the signal to noise ratio (SNR) is defined as SNR $1/\text{E}\{\sigma_x^2\}$. For all serving and interfering base stations the channel coefficients between the base station transmit antenna and the receive antennas are i.i.d. A rate ½ convolutional code with generator matrix [1 0 1;1 1 1] is used. Random interleaving is used. The decoder employs a linear approximation to the log MAP decoding algorithm. Since in accordance with the described embodiment only

two receiver antennas $ANT_1$ and $ANT_2$ are present, only one strong interference signal can be effectively canceled (see J. Winters, "Optimum combining in digital mobile radio with cochannel interference", IEEE J. Sel. Areas Commun., vol. 2, no. 4, pp. 528-539, Jul. 1984). Fig. 9 shows the block error rate (BLER) where one interferer is present with a SIR=-5dB. As can be seen, a system without IRC completely fails due to the presence of the strong interference signal. A significant performance improvement is achieved by applying SIC combined with IRC in a way as described above and after two durations the BLER performance converges slowly.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed. Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer. A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein. A further embodiment comprises a computer having installed thereon the computer program for performing one of the methods described herein. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.


**Claims**

1.  A method for recovering a desired signal transmitted in the presence of one or more interference signals, the method comprising:

    receiving (500) a signal, the received signal including a desired signal portion and one or more interference signal portions; and
    iteratively processing (502-510) the signal to obtain the desired signal,
    wherein iteratively processing the signal comprises processing the signal in each iteration by beamforming (504) having associated therewith one or more beamforming weights, the one or more beamforming weights being calculated (502) for each iteration based on the signal as processed in an earlier iteration.

2.  The method of claim 1, wherein iteratively processing the signal comprises detecting (506) a symbol in each iteration, wherein the one or more beamforming weights are calculated (502) on the basis of a detected symbol in a preceding iteration.

3. The method of claim 1 or 2, wherein the one or more beamforming weights are calculated to maximize a signal to interference plus noise ratio (SINR) between the target detected signal in a current iteration and other signals left in the processed received signals.

4. The method of one of claims 1 to 3, wherein
iteratively processing the received signal further comprises a number of iterations in which the interference signal portion is calculated on the basis of information from a previous iteration, and the interference signal portion is canceled, and
the desired signal portion is estimated and decoded following the iteration.

5. The method of one of claims 1 to 4, wherein processing the received signal comprises:

(a) at an initial stage, processing (502) the signal received by beamforming using one or more initial beamforming weights,
(b) obtaining (506) an initial estimate of the strongest signal on the basis of the signal processed by beamforming, the initial estimate including soft information,
(c) subtracting (508) from the signal received the soft information to generate a processed signal (510),
(d) on the basis of the processed signal calculating the one or more beamforming weights,
(e) obtaining an estimate of the next strongest signal on the basis of the processed signal processed by beamforming, the estimate including soft information, and
(f) repeating steps (c) to (e) on the basis of the processed signal, until an estimate of the desired signal portion is obtained or until a maximum number of iterations is reached.

6. The method of claim 5, wherein the one or more initial beamforming weights are calculated on the basis of pilot symbols included in the signal received.

7. The method of one of claims 1 to 6, wherein
receiving (500) a signal comprises receiving the signal including the desired signal portion and the one or more interference signal portions at a plurality of antennas ($ANT_1$, $ANT_2$), and
iteratively processing a received signal comprises for a number of iterations:

calculating the one or more beamforming weights,
suppressing the desired signal portion and other interference signal portions by beamforming,
estimating one of the interference signal portions,
subtracting the estimated one interference signal portion from the received signal,
recalculating the one or more beamforming weights,
suppressing the other interference signal portions,
estimating the desired signal portion, and
decoding the desired signal.

8. The method of claim 7, wherein the number of iterations depends from the number of interference signals the receiver can cancel.

9. The method of claim 8, wherein the number of iterations is an arbitrary number which is independent from the number of receive antennas, the number of interference signals to be detected and subtracted being upper-bounded by the number of receive antennas minus one.

10. The method of one of claims 1 to 9, wherein beamforming comprises linear receiver beamforming, e.g. interference rejection combining.

11. The method of one of claims 1 to 10, wherein processing the received signal comprises interference cancellation, for example successive interference cancellation.

12. A computer program product comprising instructions stored on a machine-readable medium for performing the method of one of claims 1 to 11, wherein the instructions are executed on a computer.

13. A receiver for recovering a signal transmitted in the presence of one or more interference signals, the receiver comprising:

a plurality of antennas ($ANT_1$, $ANT_2$), and

a signal processor (300-308) configured to receive from the antennas ($ANT_1$, $ANT_2$) a signal, the received signal including a desired signal portion and one or more interference signal portions, and configured to iteratively process (502-510) the received signal to obtain the desired signal,

wherein the signal processor (300-308) is configured to process in each iteration the signal by beamforming having associated therewith one or more beamforming weights, wherein the signal processor (300-308) is configured to calculate the one or more beamforming weights for each iteration based on the received signal as processed in an earlier iteration.

14. A mobile unit for a wireless communication system, comprising a receiver of claim 13 for recovering a desired signal transmitted in the presence of one or more interference signals.

15. A base station for a communication system, comprising a receiver of claim 13 for recovering a desired signal transmitted in the presence of one or more interference signals.

FIG 1

## FIG 2

## FIG 3

..0010110.1.

100

MIMO
detection
&
interference
cancellation

deinterleaver

$\Pi^{-1}$

102

106

$\Pi$

interleaver

channel
decoder

104

## FIG 4

208

212

200

source

202

channel
encoder

204

interleaver

pilots

$s^p$

206

symbol
mapper

$s^d$

MUX

$s$

210

## FIG 5

FIG 6

FIG 7A

EP 2 442 458 A1

FIG 7B

EP 2 442 458 A1

**FIG 8**

received signal
(incl. desired & interference portion)

500 — | signal = received signal |

502 — | calculate beam forming weights from signal |

504 — | apply linear beam forming to the signal |

506 — | obtain estimated symbol from strongest signal |

508 — | subtract estimated symbol from signal to generate processed signal |

510 — | signal = processed signal |

512 — final estimate or max. number of iterations reached? — no

yes

514 — | decode signal |

output decoded signal

FIG 9

EP 2 442 458 A1

Europäisches
Patentamt

European
Patent Office

Office européen
des brevets

# EUROPEAN SEARCH REPORT

Application Number

EP 10 18 7920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/135053 A1 (HAARTSEN JACOBUS C [NL] HAARTSEN JACOBUS CORNELIS [NL]) 14 June 2007 (2007-06-14) * abstract * * paragraphs [0060] - [0080] * * figures 3-7 * ----- | 1-15 | INV. H04B7/08 H04B1/707 |
| X | EP 1 158 695 A2 (NTT DOCOMO INC [JP]) 28 November 2001 (2001-11-28) * abstract * * paragraphs [0022] - [0030], [0 35] - [0052]; figures 4, 6, 7 * ----- | 1-15 | |
| X | US 6 069 912 A (SAWAHASHI MAMORU [JP] ET AL) 30 May 2000 (2000-05-30) * abstract * * column 6, line 3 - column 9, line 6 * * figure 2 * ----- | 1-15 | |
| A | US 2004/131134 A1 (HIROYASU SANO [JP] SANO HIROYASU [JP]) 8 July 2004 (2004-07-08) * abstract * * paragraphs [0049] - [0118] * * figure 1 * ----- | 1-15 | TECHNICAL FIELDS SEARCHED (IPC) H04B |

The present search report has been drawn up for all claims

| Place of search | Date of completion of the search | Examiner |
|---|---|---|
| Munich | 9 March 2011 | Helms, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 18 7920

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2011

| Patent document cited in search report | | Publication date | Patent family member(s) | | Publication date |
|---|---|---|---|---|---|
| US 2007135053 | A1 | 14-06-2007 | AU | 2003294780 A1 | 08-06-2005 |
| | | | CN | 1860700 A | 08-11-2006 |
| | | | WO | 2005050869 A1 | 02-06-2005 |
| | | | JP | 4451848 B2 | 14-04-2010 |
| | | | JP | 2007515835 T | 14-06-2007 |
| EP 1158695 | A2 | 28-11-2001 | CN | 1325243 A | 05-12-2001 |
| | | | US | 2002003842 A1 | 10-01-2002 |
| US 6069912 | A | 30-05-2000 | CA | 2211619 A1 | 05-06-1997 |
| | | | CN | 1169801 A | 07-01-1998 |
| | | | DE | 69636472 T2 | 01-02-2007 |
| | | | EP | 0806844 A1 | 12-11-1997 |
| | | | WO | 9720400 A1 | 05-06-1997 |
| | | | JP | 3165447 B2 | 14-05-2001 |
| | | | KR | 100271120 B1 | 01-11-2000 |
| US 2004131134 | A1 | 08-07-2004 | CN | 1535511 A | 06-10-2004 |
| | | | EP | 1392007 A1 | 25-02-2004 |
| | | | WO | 02098019 A1 | 05-12-2002 |
| | | | JP | 2002353866 A | 06-12-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. WINTERS.** Optimum combining in digital mobile radio with cochannel interference. *IEEE J. Sel. Areas Commun.,* July 1984, vol. 2 (4), 528-539
- **M. TÜCHLER ; R. KOETTER ; A. C. SINGER.** Turbo equalization: principles and new results. *IEEE Trans. Commun.,* May 2002, vol. 50 (5), 754-767
- **X. WANG ; H. POOR.** Iterative (turbo) soft interference cancellation and decoding for coded CDMA. *IEEE Trans. Commun.,* July 1999, vol. 47 (7), 1046-1061
- **G. J. FOSCHINI ; G. D. GOLDEN ; R. A. VALENZUELA ; P. W. WOLNIANSKY.** Simplified processing for high spectral efficiency wireless communication employing multi-element arrays. *IEEE J. Sel. Areas Commun.,* November 1999, vol. 17 (11), 1841-1852
- **R. A. MONZINGO ; T. W. MILLER.** *Introduction to adaptive arrays,* 1980
- **L. Zheng ; D.N.C. Tse.** Diversity and multiplexing: A fundamental tradeoff in multiple antenna channels. *IEEE Trans. On Inform. Theory,* May 2003, vol. 49 (5), 1073-1096
- **M. TÜCHLER ; A. C. SINGER ; R. KOETTER.** Minimum mean squared error equalization using a priori information. *IEEE Trans. Signal Processing,* March 2002, vol. 50, 673-683
- **E. G LARSSON.** Robust structured interference rejection combining. *Proc. Of IEEE Wireless Communications and Networking Conference,* March 2005
- **M. Tüchler ; R. Koetter ; A. C. Singer.** Turbo equalization: principles and new results. *IEEE Trans. Commun.,* May 2002, vol. 50 (5), 754-767
- **M. Tüchler ; A. C. Singer ; R. Koetter.** Minimum mean squared error equalization using a priori information. *IEEE Trans. Signal Processing,* May 2002, vol. 50, 673-683
- **K. Fang ; L. Rugini ; G. Leus.** Low-complexity block turbo equalization for OFDM systems in time-varying channels. *IEEE Trans. Signal Processing,* November 2008, vol. 56 (11), 5555-5566
- **K. FANG ; L. RUGINI ; G. LEUS.** Low-complexity block turbo equalization for OFDM systems in time-varying channels. *IEEE Trans. Signal Processing,* November 2008, vol. 56 (11), 5555-5566